# EUROPEAN PATENT SPECIFICATION

(11) **EP 2 015 629 B1**
(45) Date of publication and mention of the grant of the patent: **07.09.2011**
(21) Application number: 07734506.4
(22) Date of filing: 08.05.2007
(51) Int. Cl.: A01D 46/26, A01D 46/253

(54) **ELECTRIC DEVICE FOR HARVESTING SMALL FRUIT PIECES**
ELEKTRISCHE VORRICHTUNG ZUM ERNTEN VON KLEINEN FRUCHTSTÜCKEN
DISPOSITIF ÉLECTRIQUE POUR LA RÉCOLTE DE PETITS FRUITS

(30) Priority: 08.05.2006 IT PI20060055
(43) Date of publication of application: 21.01.2009
(73) Proprietor: Aima S.R.L., 56040 Cenaia (PI) (IT)
(72) Inventor: BACCI, Lubiano, 56030 Perignano (PI) (IT)
(74) Representative: Celestino, Marco
(86) International application number: PCT/IB2007/001191
(87) International publication number: WO 2007/129207

(56) References cited:
- EP-A- 1 175 823
- WO-A-01/50838
- FR-A1- 2 327 719
- FR-A2- 2 168 043
- US-A- 5 099 637
- US-A- 5 437 146

## Description

### Field of the invention

The present invention relates to the industrial field of the agricultural machines for harvesting small fruit pieces. In particular, it relates to a portable device adapted to cause small fruit pieces, for example olives, coffee, almonds, pistachio, etc., to fall from plants by the use of vibration.

### Background of the invention.

Various devices are known capable of harvesting small fruit pieces, for example olives, by the vibration and/or the rotation of fingers that shake the end parts of the plant branches.

W00150838 describes a portable apparatus for harvesting small fruit pieces having a pole with a handgrip, a harvesting head comprising a plurality of movable fingers that enter among the leaves of a fruit bearing tree, and a motor that cause the fingers to vibrate among the branches to cause in turn the small fruit pieces to fall. The fingers are connected to a support that is reciprocated by the motor.

Such device has the drawback of transmitting relevant vibrations also to an operator, causing discomfort, with loose of control of the vibrations applied to the branches with the risk of damaging them. This forces to reduce the speed of the motor and then to increase the harvesting time.

In EP 1175823, a device for harvesting small fruit pieces is disclosed comprising one shaker member oscillating by the operation of a drive means. The drive means comprises a support element to which a plurality of prongs are rigidly fixed. A support means is also provided which is gripped by an operator and which carries at its upper end the shaker member such that it can be brought into operation at heights greater than two metres.

Therefore the need is felt to provide a portable device that solves these problems.

### Summary of the invention

A feature of the present invention is to provide a driven portable device for harvesting by shaking small fruit pieces from plants the end parts of the branches of the plants, which is light and easily operable, and that allows a comfortable use with a substantial reduction of the vibrations transmitted to an operator.

Another feature of the present invention is to provide a driven portable device for harvesting small fruit pieces adapted to reduce the working time, the playing forces and then the costs of operation, with particular attention to the safety of the operator.

Another feature of the present invention is to provide a driven portable device for harvesting small fruit pieces, which can be used also on rough or slanted ground heavy and/or cumbersome shaking machines cannot be operated.

It is still a feature of the invention to provide a driven portable device for harvesting small fruit pieces that allows the work from ground level, without the need for an operator to use of a ladders, also for trees of different height, to increase the operator's safety.

These and other objects are achieved by a driven portable device according to the present invention for harvesting small fruit pieces from plants by shaking, comprising:
- two guide plates consisting of a substantially plane body from which a plurality of fingers extend, said bodies having respective pivot points arranged on a same axis;
- a support to which said guide plates are pivotally connected at said pivot points;
- a driven transmission mechanism mounted in said support capable of causing said two guide plates to oscillate with opposite oscillating strokes;
- a pole having a first end connected to said support and a second end having a handgrip.

According to another aspect of the present invention, the above described objects are achieved by a driven portable device for harvesting by shaking small fruit pieces from plants comprising:
- at least one comb member consisting of a substantially plane body from which a plurality of fingers extend, said body having an elongated hole and a pivot point set between said elongated hole and said fingers;
- a support to which said comb member is pivotally connected at said pivot point;
- a driven transmission mechanism mounted in said support and having an excentrical pin that engages with said elongated hole causing said at least one comb member to oscillate with alternated movement rotating about said pivot point;
- a pole having a first end connected to said support and a second end having a handgrip.

Advantageously, two guide plates are provided arranged on parallel planes and both pivotally connected at said respective pivot point according to a same axis, said driven mechanism causing said plates to oscillate according to opposite strokes.

In particular, said body of each comb member has an elongated hole and said driven mechanism has a couple of excentric pins that engage with the respective elongated holes of each body for causing each comb member to oscillate in alternated movement according to opposite strokes.

Advantageously said driven mechanism comprises an electric motor, in particular, fed by a electric battery.

Advantageously, said comb member is mounted on said pole through said support in order to result at an angle set between 5° and 90°, in particular, between 10° and 60°, preferably between 15° and 45°.

In particular, said electric motor, said driven transmission mechanism and said at least one comb member, having each an own weight, are mounted at an angle such that balance the forces of inertia generated by said weights in movement with respect to the axis of said pole, for reducing vibrations and unbalancements.

In particular, said motor and said comb member are hinged with respect to said axis in order to result substantially symmetrical with respect to said axis.

In a possible exemplary embodiment, said fingers comprise releasable engagement means with said body of said comb member.

In particular, said releasable engagement means comprise a mounting bushing, having a longitudinal through hole for housing one of said fingers, said bushing having at least one longitudinal radial groove capable of tightening said through hole when said bushing is pressed laterally, said bushing being adapted to be inserted in a corresponding housing that can be shrunk by locking means, obtained in said body of said comb member, so that when said housing is shrunk, said housing presses said bushing that grips said finger blocked in said through hole.

Advantageously, said portable harvesting device comprises switching means located preferably at said handgrip.

Advantageously, said pole is extensible in a way selected from the group comprised of:
- telescopically;
- adding extension elements longitudinally to the pole, connected through means removable fastening means.

Advantageously, said portable harvesting device comprises articulated means for orienting said at least one comb member with respect to said pole, according to an angle set between -30° and +30°, preferably between -15° and +15°.

### Brief description of the drawings

The invention will be made clearer with the following description of some exemplary embodiments, exemplifying but not limitative, with reference to the attached drawings wherein:
- Figure 1 shows a perspective view of a portable device for harvesting small fruit pieces, electrically operated, according to the invention;
- Figure 2 shows a perspective view of a head of such a device having two shaking guide plates having opposite alternated movements, where the head is depicted without cover for showing mechanisms inside;
- Figure 3 shows an example of one of such shaking guide plates having an axis of rotation and an elongated hole for transmitting the motion;
- Figures 4 and 5 show a top plan and side view, respectively, of a gear having an excentric pin on either side in diametrically opposite positions with respect to the axis of rotation, wherein this gear is capable of providing a reciprocating rotation to the guide plates;
- Figure 6 shows a detail of the kinematik between the elongated hole of the comb member and the excentric pin;

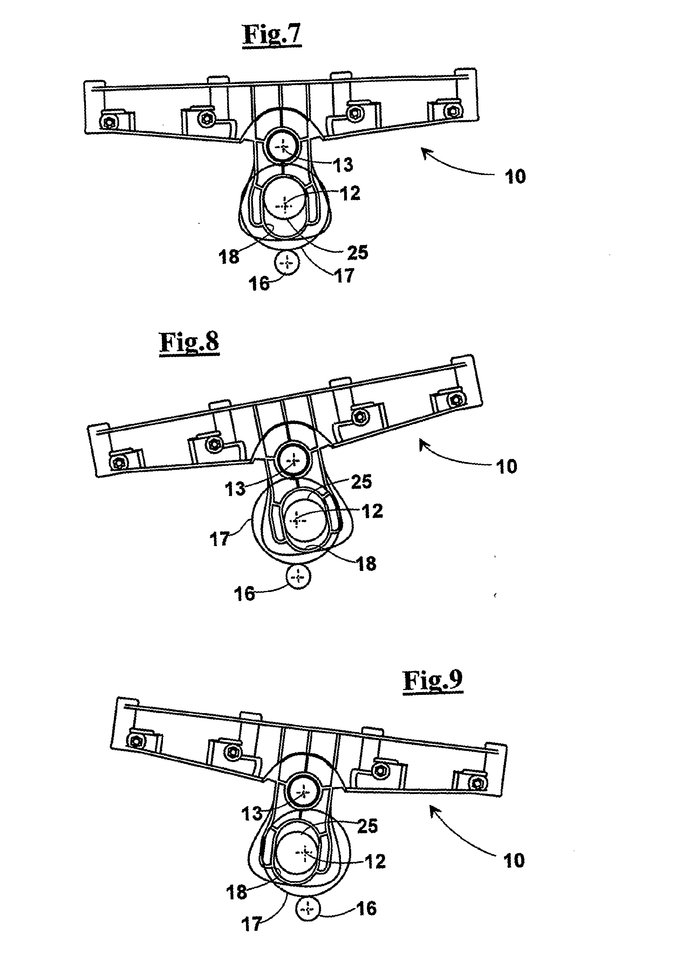

- Figures 7-9 show the comb member in three different angular positions, operated by the above described gear with excentric pins;
- Figure 10 shows an exploded view of a finger of the above described comb member and a bushing capable of gripping the finger when it is pressed laterally;
- Figure 11 shows the finger inserted in the bushing;
- Figure 12 shows finger and bushing assembled in corresponding through holes in the body of said comb member, where the bushings are pressed laterally by tightening respective locking screws;
- Figure 13 shows a preferred exemplary embodiment of a device according to the invention where the motor and the guide plates are arranged at an angle such that the forces of inertia of the bodies in movement are balanced thus reducing the vibrations transmitted to an operator during the use;
- Figure 14 shows an alternative exemplary embodiment where the motor is mounted near the handgrip;
- Figure 15 shows an end brings on of the above described pole, having a handgrip with a turning on/off switch, and a pole extension element for the pole.

### Description of the preferred exemplary embodiment

In the following description an example will be illustrated of a portable device for harvesting small fruit pieces, electrically operated, according to the invention.

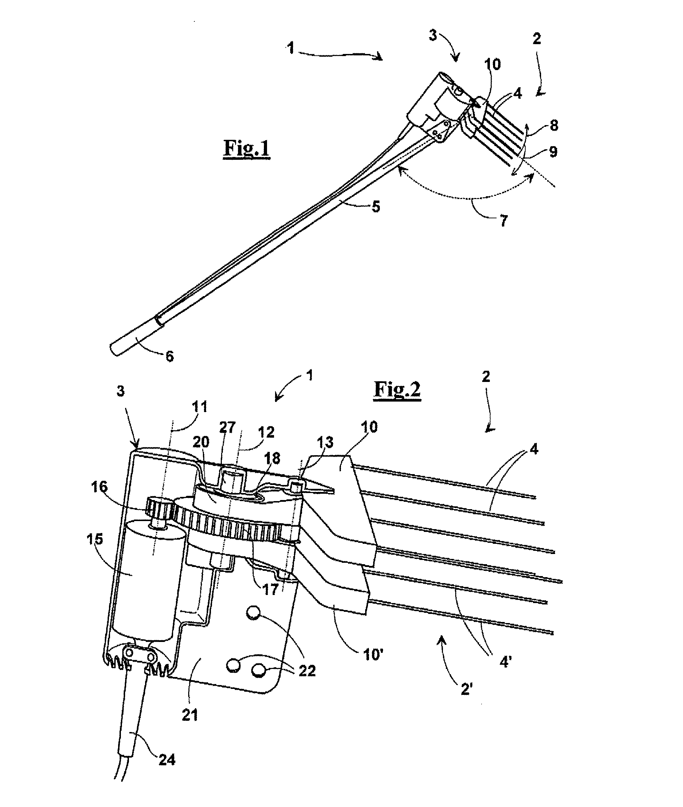

Figure 1 shows an example of a device according to the invention having a motor head 1 capable of providing rotational alternated movement, according to a predetermined angle, to at least one comb member 2 consisting of a substantially plane body 10 and a plurality of fingers 4, resistant and flexible, that extend from body 10. In particular, in the example of figure 1, the motor head 1 1 is capable of moving two comb members 2, operated with opposite oscillating movements according to arrows 8 and 9.

Motor head 1 is mounted on a pole 5, having at one end a handgrip 6, whereby the pole 5 allows an operator to position the motor head 1 into contact with the branches of a plant tree from which harvesting the fruit pieces. The alternated oscillating motion of comb members 2 produces a vibrating motion to fingers 4 that is capable of causing the fruit pieces to detach from the branches and to fall. The motion of comb members 2 occurs on two respective parallel planes about a respective pivot point 13 belonging to a same axis as shown in figure 2.

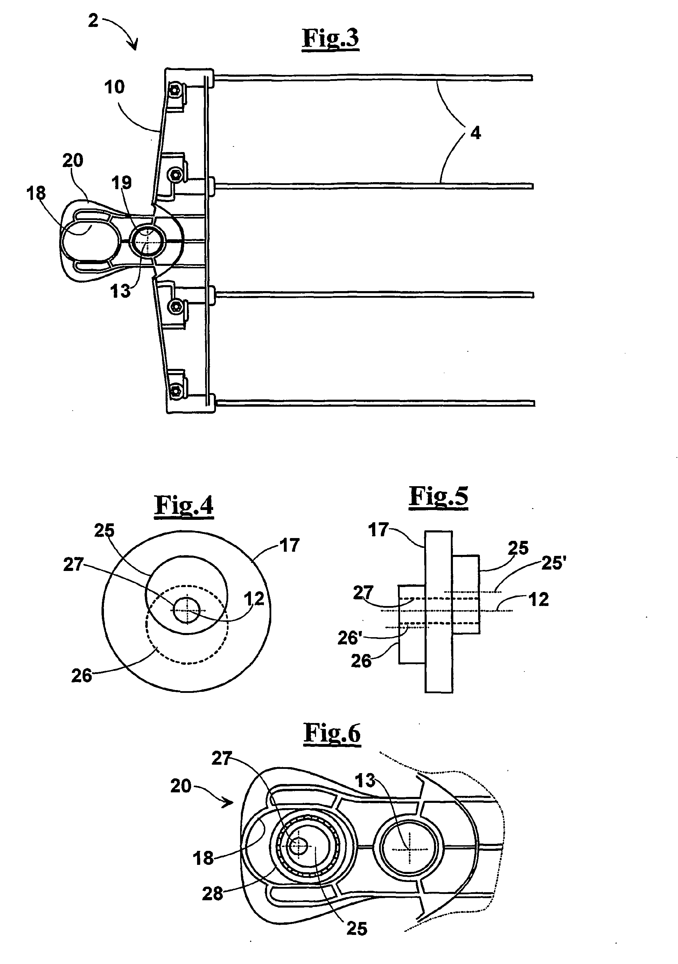

In particular, figure 2 shows a cross sectional view of a cam mechanism that causes the rotational opposite oscillating movements of two comb members 2 and 2'. In figure 2, motor head 1 is depicted by cross sectioning a carter 3 to show the mechanism inside, for a better understanding. This cam mechanism comprises a driven gear 17, for example a gear wheel that is mounted on a shaft 27 and whose shape is shown in figures 4 and 5.

In figures 4 and 5, on either side of driven gear 17 a cylindrical pin 25 and 26 is respectively provided, with axes 25' and 26' parallel to axis 12 of gear 17. Such axes 25' and 26' are in an excentric position diametrically opposite with respect to axis 12.

With reference to Fig. 1, comb members 2 and 2' lay in a respective plane that is at an angle 7 with respect to pole 5, to assist a correct introduction of the fingers between the branches of a plant. Angle 7 can be calculated by a skilled person in order to balance the forces of inertia of the bodies in movement thus reducing the vibrations transmitted to an operator during the use.

As shown in figure 2, gear 17 is driven by a pinion gear 16 of an electric motor 15, which is preferably fed by a battery, for example a 12 Volts battery, via an electric cable 24, so that the portable device is autonomous. Obviously, alternatively, the electric motor 15 can be fed by other sources of electric energy. In the example described in the figure the axis of rotation 11 of the pinion gear 16 is parallel to the axis 12 of gear 17. Pinion gear 16 is for example of brass, whereas gear 17, for example, is acetalic resin.

With reference to Figs. 2 to 4, plane bodies 10,10' of comb members 2 and 2' (in Fig. 3 only comb member 2 is shown for simplicity), have a common axis of rotation 13 parallel to axes 11 and 12. Each body 10 has an embracing portion 20 for the mechanism, which extends opposite with respect to fingers 4 and has an elongated hole 18 wherein the pin 25 or the pin 26 engage.

As shown in Fig. 2, motor head 1 has a bracket 21 for fastening to the pole 5 of Fig. 1, having fastening holes 22.

In particular figure 3 shows a possible exemplary embodiment of comb member 2, of a device according to the invention, having a body 10 with substantially plane shape having an axis of rotation 13 and an embracing portion 20 opposite to fingers 4 with respect to axis 13. At axis 13 a housing 19 is present that is adapted to house a fixed pin. A bearing can be provided, not shown, in housing 19. The embracing portion 20 comprises an elongated through hole 18, which extends for example in a radial direction with respect to axis 13 and parallel to fingers 4.

In figure 6 the embracing portion 20 is shown in detail having elongated hole 18, in which pin 25 or 26 engage, so that the rotation of gear 17 about axis 12 brings also pins 25 and 26 into rotation about the same axis 12, transforming the circular movement of gear 17 into a reciprocating rotation of body 10. Between pin 25 and elongated hole 18 a ball bearing 28 can be provided to reduce the friction.

Figures from 7 to 9 show successive steps of the motion of body 10 of the comb member 2 and of the cam mechanism comprising gear 17, with pin 25 which is movable in the elongated hole 18 and wheeled by pinion gear 16.

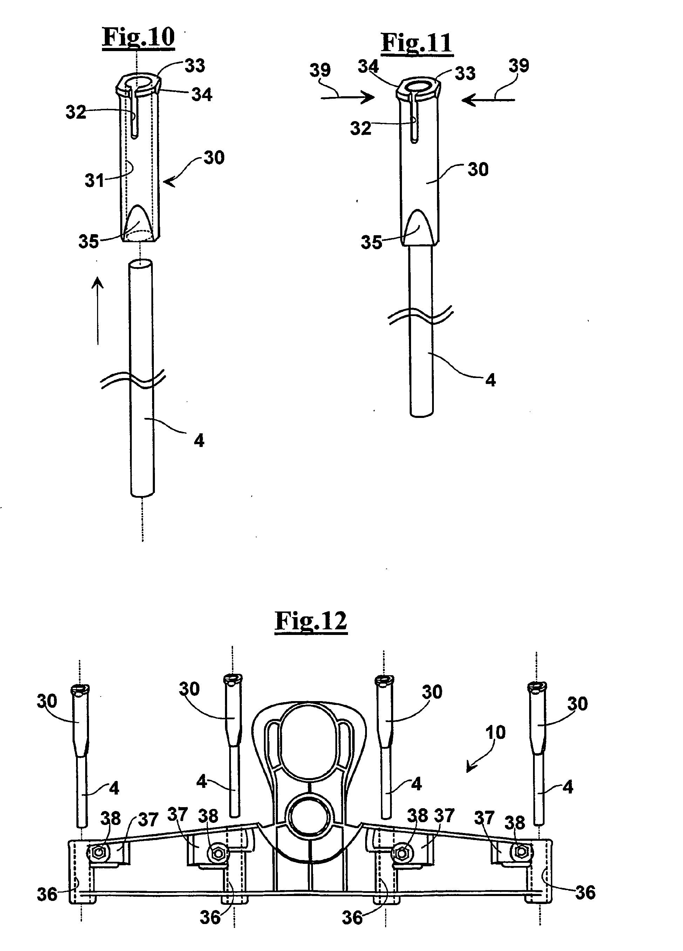

In figures 10 and 11 an exploded view is shown of a finger 4 of the above described comb member 2 and a bushing 30 capable of gripping finger 4 when bushing 30 is pressed laterally. Bushing 30 has cylindrical shape and has an axial through hole 31 for housing finger 4. At one end a flange 33 is present with one or two side flattenings 34 for aligning bushing 30 in its housing, not shown, of the comb member body 2. At the same end a longitudinal groove 32 is present capable of tightening the through hole 31 when the bushing is pressed laterally according to arrows 39, as shown in figure 11.

At the opposite ends of bushing 30 a beveled flattening 35 can be present to assist the introduction in the housings 36 of body 10 (Fig. 12), or also a tapered surface. Differently from figure 10, in figure 11 the finger 4 is shown put in the bushing 30.

In figure 12 it is shown how the fingers 4, with bushings 30, can be put in corresponding housings 36 of the body 10. Housings 36 have the shape of a cylindrical through hole, having at an edge a chamber with flexible walls 37, that can be approached by locking a screw 38, so that when the diameter of the end of housing 36 is reduced, it presses laterally on bushing 30 gripping finger 4.

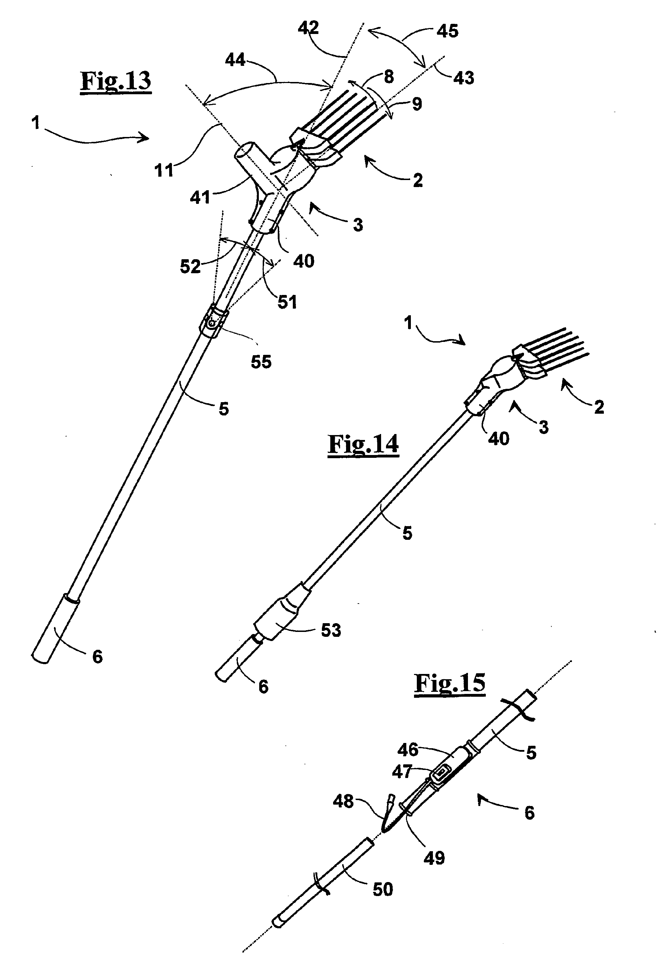

In figure 13 an alternative exemplary preferred embodiment is described of a device according to the invention, where the inner parts of the motor head 1 are arranged at a predetermined angle 44 and 45, for balancing the forces of inertia of the moving parts and for reducing the vibrations transmitted to an operator, for a comfortable use. This exemplary embodiment allows also to achieve lightness and ergonomy. In particular, the motor, that is contained in the elongated portion 41 of head 1, is protrudingly arranged with respect to the axis of pole 5 and of a respective pole housing 40, with the respective pinion gear, not shown in the figure, oriented towards pole 5. In carter 3 a cam mechanism is present similar to that shown in figure 2; therefore a corresponding driven gear is present with an axis that is parallel to the axis 11 of the pinion gear. The angle 44 between axis 11 of the motor and axis 42 of pole 5 and the angle 45 between the plane 43 of the comb member 2 and the axis 42 of the pole are optimized for balancing the forces of inertia and then the weights of the motor head and of the comb members. At the end opposite to motor head 1, pole 5 has a handgrip 6 to assist the grip of an operator. More in detail, the angle 45 between comb members 2 and pole 5 is set, for example, between 5° and 90°, in particular, between 10° and 60°, preferably between 15° and 45°. In a possible embodiment, angle 44 is chosen in order to be complementary to angle 45, the angle set between the axes 11 and 43 being preferably a right angle.

An articulated joint 55 for orienting head 1 with respect to pole 5, in an adjustable way and adapting to the configuration of the harvesting device, according to the spaces between the branches and/or the height of the trees. The articulated joint 55 may have one or more pivoting axes, allowing pivoting angles 51 and 52 set between -30° and +30°, preferably between -15° and +15°.

Notwithstanding, in figure 13 the pole 5 has been shown with a articulated joint 55, it is obvious that advantageously, it can be made without any joints.

In figure 14 a further exemplary embodiment is shown of a portable device according to the invention, wherein instead of motor 15 of fig. 2, a motor 53 is mounted along the axis of pole 5, near handgrip 6. In this case a transmission shaft is provided, not shown, between motor 53 and head 1, preferably arranged within pole 5, which in this case is tubular. The transmission shaft can have, at its end, respective resilient joints for compensating possible shifting between the axes and for reducing the vibrations transmitted to an operator.

In figure 15 a detail of this handgrip 6 is shown, having a block 46 with a switch 47 and a supply cable 48. The end of pole 5 having handgrip 6 can provide means for extending the pole same, for example by an extension element 50 that can be inserted in an axial hole 49 of pole 5, creating for example a telescopical extension arrangement.

## Claims

1. A driven portable device for harvesting by shaking small fruit pieces from plants comprising:
- two comb members (2,2'), respectively consisting of substantially plane bodies (10, 10') from which a plurality of fingers (4,4') extend,
**characterized in that** said substantially plane bodies (10, 10') have respective pivot points arranged on a same pivot axis (13):
and **in that** said driven portable device further comprises:
- a support carter (3) to which said guide plates (10,10') are pivotally connected at said pivot points about said pivot axis (13);
- a driven transmission cam mechanism (17) pivotally mounted in said support carter (3) that is capable of causing said two guide plates (10,10') to oscillate with opposite oscillating strokes (8,9);
- a pole (5) having a first end connected (22,40) to said support carter (3) and a second end having a handgrip (6).

2. A driven portable device for harvesting by shaking small fruit pieces from plants comprising:
- at least one comb member (2,2') consisting of a substantially plane body (10,10') from which a plurality of fingers (4,4') extend,
**characterized in that** said body (10,10') has an elongated hole (18) and a pivot point which has a pivot axis (13) that is set between said elongated hole (18) and said fingers (4,4');
and **in that** said driven portable device further comprises:
- a support carter (3) to which said comb member (2) is pivotally connected at said pivot point about said pivot axis (13);
- a driven transmission mechanism (17) mounted in said support carter (3) and having an excentric pin (25, 26) that engages with said elongated hole causing said at least one comb member (2,2') to oscillate with alternated movement rotating about said pivot point according to a pivot axis (13);
- a pole (5) having a first end connected to said support carter (3) and a second end having a handgrip (6).

3. A driven portable device, according to claim 2, wherein two guide plates (10,10') are provided arranged on parallel planes and both plates (10,10') pivotally connected at said respective pivot point according to said pivot axis (13), said driven mechanism causing said comb members (2,2') to oscillate according to opposite strokes (8,).

4. A driven portable device, according to claim 1, wherein said body of each comb member (2,2') has an elongated hole (18) and said driven mechanism (17) has a couple of excentric pins (25,26) that engage with the respective elongated holes (18) of each body for causing each comb member (2,2') to oscillate in alternated movement according to opposite strokes (8,9).

5. A driven portable device, according to claims 1 or 2, wherein said driven mechanism comprises an electric motor (15), in particular, fed by an electric battery.

6. A driven portable device, according to claims 1 or 2, wherein said comb member (2,2') is mounted on said pole (5) through said support carter (3) in order to result at an angle with respect to said pole(5) for an angle set between 5° and 90°, in particular, between 10° and 60°, preferably between 15° and 45°.

7. A driven portable device, according to claim 5, wherein said electric motor (15), said driven transmission mechanism (17) and said at least one comb member (2,2') have respective weights and are mounted with respect to said pole (5) at respective angles in such a way to balance the forces of inertia generated by said weights for reducing vibrations and unbalancements when said weights are in movement with respect to the axis (42) of said pole (5).

8. A driven portable device, according to claim 3 wherein said motor (15) and said comb members (2, 2') are mounted in order to result substantially symmetrical with respect to said axis.

9. A driven portable device, according to claim 1 or 2, wherein said fingers (4) comprise releasable engagement means (30,37,38) with said body (10) of said comb member (2).

10. A driven portable device, according to claim 9, wherein said releasable engagement means comprise a mounting bushing (30), having a longitudinal through hole (31) for housing one of said fingers (4), said bushing (30) having at least one longitudinal radial groove (32) capable of tightening said through hole (31) when said bushing (30) is pressed laterally, said bushing (30) being adapted to be inserted in a corresponding housing (36) that can be shrinked by locking means (37,38), obtained in said body of said comb member (2), so that when said housing is shrinked, said housing (36) presses said bushing (30) that grips said finger (30) blocked in said through hole (31).

11. A driven portable device, according to claim 1 or 2, wherein said portable harvesting device comprises switching means located preferably at said handgrip (6).

12. A driven portable device, according to claim 1 or 2, wherein said pole (5) is extensible in a way selected from the group comprised of:
- telescopically;
- adding extension elements longitudinally to the pole, connected through removable fastening means.

13. A driven portable device, according to claim 1, or 2, wherein said portable harvesting device comprises articulated means (55) for orienting said at least one comb member (2,2') with respect to said pole (5), according to an angle set between -30° and +30°, preferably between -15° and +15°.

## Patentansprüche

1. Eine angetriebene tragbare Vorrichtung zum Ernten durch Abschütteln kleiner Fruchtstücke von Pflanzer, mit:
- zwei Kammelementen (2,2') die jeweils aus im Wesentlichen ebenen Körpern (10,10') bestehen, von denen sich mehrere Finger (4,4') erstrecken,
**dadurch**, gekenntzeichnet, dass die im Wesentlichen ebenen Körper (10,10') jeweilige Schwenkpunkte besitzen, die auf der selben Schwenkachse (13) angeordnet sind,
und **dadurch**, dass die angetriebene tragbare Vorrichtung ferner aufweist:
- einen Halteträger (3), mit dem die Führungsplatter (10,10') an den Schwenkpunkten um die Schwenkachse (13) schwenkbar verbunden sind,
- einen angetriebenen Getriebe-Nockenmechanismus (17), der schwenkbar in dem Halteträger (3) angebracht ist und der eine oszillierende Bewegung der zwei Führungsplatten (10,10') mit entgegengesetzten Oszillationshüben (8,9) bewirken kann,
- einen Stab (5) mit einem ersten Ende, das mit dem Halteträger (3) verbunden ist (22,40), und einem zweiten Ende mit einem Handgriff (6).

2. Eine angetriebene tragbare Vorrichtung zum Ernten durch Abschütteln kleiner Fruchtstücke von Pflanzen, mit:
- mindestens einem Kammelement (2,2'), das aus einem im Wesentlichen ebenen Körper (10,10') besteht, von dem sich mehrere Finger (4,4') erstrecken,
**dadurch gekennzeichnet, dass** der Körper (10,10') ein längliches Loch (18) und einen Schwenkpunkt besitzt, der eine Schwenkachse (13) hat, die sich zwischen dem länglichen Loch (18) und den Fingern (4,4') befindet,
und **dadurch**, dass die angetriebene tragbare Vorrichtung ferner aufweist:
- einen Halteträger (3), mit dem das Kammelement (2) an dem Schwenkpunkt um die Schwenkachse (13) schwenkbar verbunden ist,
- einen angetriebenen Getriebe-Mechanismus (17), der in dem Halteträger (3) angebracht ist und einen Exzenterstift (25,26) besitzt, der mit dem länglichen Loch in Eingriff ist und bewirkt, dass das mindestens eine Kammelement (2,2') mit einer alternierenden Bewegung, die sich um den Schwenkpunkt gemäß der Schwenkachse (13) dreht, oszilliert,
- eine Stange (5) mit einem ersten Ende, das mit dem Halteträger (3) verbunden ist, und einem zweiten Ende mit einem Handgriff (6).

3. Eine angetriebene tragbare Vorrichtung gemäß Anspruch 2, wobei zwei Führungsplatten (10,10') vorgesehen und an bzw. in parallelen Ebenen angeordnet sind, und beide Platten (10,10') an den jeweiligen Schwenkpunkten gemäß der Schwenkachse (13) schwenkbar verbunden sind, wobei der angetriebene Mechanismus die Kammelemente (2,2') zu einer Oszillation gemäß entgegengesetzten Hüben (8) veranlasst.

4. Eine angetriebene tragbare Vorrichtung gemäß Anspruch 1, wobei der Körper jedes Kammelements (2,2') ein längliches Loch (18) besitzt und der angetriebene Mechanismus (17) ein Paar Exzenterstifte (25,26) aufweist, die mit den jeweiligen länglichen Löchern (18) jedes Körpers in Eingriff sind, um jedes Kammelement (2,2') zum Oszillieren in alternierenden Bewegungen gemäß entgegengesetzten Hüben (8,9) zu veranlassen.

5. Eine angetriebene tragbare Vorrichtung gemäß Anspruch 1 oder 2, wobei der angetriebene Mechanismus einen elektrischen Motor (15), insbesondere durch eine elektrische Batterie versorgt, aufweist.

6. Eine angetriebene tragbare Vorrichtung gemäß Anspruch 1 oder 2, wobei das Kammelement (2,2') an der Stange (5) über den Halteträger (3) angebracht ist, damit ein Winkel bezüglich der Stange (5) gebildet wird, wobei ein Winkel zwischen 5 und 90 Grad und insbesondere zwischen 10 und 60 Grad und vorzugsweise zwischen 15 und 45 Grad eingestellt ist.

7. Eine angetriebene tragbare Vorrichtung gemäß Anspruch 5, wobei der elektrische Motor (15), der angetriebene Getriebemechanismus (17) und das mindestens eine Kammelement (2,2') jeweilige Massen besitzen und bezüglich der Stange (5) unter jeweiligen Winkeln auf solche Weise angebracht sind, dass die Trägheitskräfte, die durch die Massen erzeugt werden, zur Verringerung von Schwingungen und ungleichmäßigen Verteilungen ausgeglichen werden, wenn die Massen bezüglich der Achse (42) der Stange (5) in Bewegung sind.

8. Eine angetriebene tragbare Vorrichtung gemäß Anspruch 3, wobei der Motor (15) und die Kammelemente (2,2') so angebracht sind, dass sie im Wesentlichen symmetrisch bezüglich der Achse sind.

9. Eine angetriebene tragbare Vorrichtung gemäß Anspruch 1 oder 2, wobei die Finger (4) lösbare Eingriffsmittel (30,37,38) mit dem Körper (10) des Kammelements (2) aufweisen.

10. Eine angetriebene tragbare Vorrichtung gemäß Anspruch 9, wobei die lösbaren Eingriffsmittel eine Befestigungshülse (30) mit einem longitudinalen Durchgangsloch (31) zur Aufnahme eines der Finger (4) aufweisen, wobei die Hülse (30) mindestens eine longitudinale radiale Nut (32) besitzt, die das Durchgangsloch (31) verengen kann, wenn die Hülse (30) lateral gedrückt wird, wobei die Hülse (30) eingerichtet ist, um in ein entsprechendes Gehäuse (36) eingesetzt zu werden, dass durch Verriegelungsmittel (37,38) verengt werden kann, die in dem Körper des Kammelements (2) enthalten sind, so dass, wenn das Gehäuse verengt wird, das Gehäuse (36) die Hülse (30) drückt, welche den in dem Durchgangsloch (31) blockierten Finger (30) greift.

11. Eine angetriebene tragbare Vorrichtung gemäß Anspruch 1 oder 2, wobei die tragbare Erntevorrichtung Schaltmittel aufweist, die vorzugsweise an dem Handgriff (6) angeordnet sind.

12. Eine angetriebene tragbare Vorrichtung gemäß Anspruch 1 oder 2, wobei die Stange (5) auf einer Weise austreckbar ist, die aus der Gruppe ausgewählt ist, welche umfasst:
- teleskopierbar,
- Hinzufügen von Erweiterungselementen, die durch lösbare Befestigungsmittel verbunden sind, in Longitudinalrichtung zu der Stange.

13. Eine angetriebene tragbare Vorrichtung gemäß Anspruch 1 oder 2, wobei die tragbare Erntevorrichtung Gelenkmittel (55) aufweist zum Ausrichten des mindestens einen Kammelements (2,2') bezüglich der Stange (5) gemäß einem Winkel, der zwischen -30° und +30°, vorzugsweise zwischen -15° und +15° gewählt ist.

## Revendications

1. Dispositif portable entraîné permettant de récolter par secouage de petits fruits à partir de plantes, comprenant :
- deux organes en peigne (2, 2'), constitués respectivement de corps sensiblement plans (10, 10') à partir desquels s'étend une plurality de doigts (4, 4'), **caractérisé en ce que** lesdits corps sensiblement plans (10, 10') comportent des points de pivot respectifs agencés sur un même axe de pivot (13) ;
et **en ce que** ledit dispositif portable entraîné comprend en outre :
- un carter de support (3) auquel lesdites plaques de guidage (10, 10') sont raccordées de façon pivotante au niveau desdits points de pivot autour dudit axe de pivot (13);
- un mécanisme de came de transmission entraîné (17) monté de façon pivotante dans ledit carter de support (3) qui est capable d'amener les deux plaques de guidage (10, 10') à osciller avec des courses d'oscillation opposées (8, 9) ;
- une perche (5) ayant une première extrémité raccordée (22, 40) audit carter de support (3) et une seconde extrémité ayant une poignée (6).

2. Dispositif portable entraîné permettant de récolter par secouage de petits fruits à partir de plantes, comprenant :
- au moins un organe en peigne (2, 2') constitué d'un corps sensiblement plan (10, 10') à partir duquel s'étend une pluralité de doigts (4, 4'),
**caractérisé en ce que** ledit corps (10, 10') comporte un trou allongé (18) et un point de pivot qui comporte un axe de pivot (13) qui est établi entre ledit trou allongé (18) et lesdits doigts (4, 4') ;
et **en ce que** ledit dispositif portable entraîné comprend en outre :
- un carter de support (3) auquel ledit organe en peigne (2) est raccordé de façon pivotante au niveau dudit point de pivot autour dudit axe de pivot (13) ;
- un mécanisme de transmission entraîné (17) monté dans ledit carter de support (3) et ayant une goupille excentrique (25, 26) qui vient en prise avec ledit trou allongé, amenant ledit au moins un organe en peigne (2, 2') à osciller avec un mouvement alterné en rotation autour dudit point de pivot selon un axe de pivot (13) ;
- une perche (5) ayant une première extrémité raccordée audit carter de support (3) et une seconde extrémité ayant une poignée (6).

3. Dispositif portable entraîné selon la revendication 2, dans lequel deux plaques de guidage (10, 10') sont prévues, agencées sur des plans parallèles et les deux plaques (10, 10') sont raccordées de façon pivotante au niveau dudit point de pivot respectif selon ledit axe de pivot (13), ledit mécanisme entraîné amenant lesdits organes en peigne (2, 2') à osciller selon des courses opposées (8, 9).

4. Dispositif portable entraîné selon la revendication 1, dans lequel ledit corps de chaque organe en peigne (2, 2') comporte un trou allongé (18) et ledit mécanisme entraîné (17) comporte une paire de goupilles excentriques (25, 26) qui viennent en prise avec les trous allongés (18) respectifs de chaque corps afin d'amener chaque organe en peigne (2, 2'), à osciller dans un mouvement alterné selon des courses opposées (8, 9).

5. Dispositif portable entraîné selon la revendication 1 ou 2, dans lequel ledit mécanisme entraîné comprend un moteur électrique (15), en particulier, alimenté par une batterie électrique.

6. Dispositif portable entraîné selon la revendication 1 ou 2, dans lequel ledit organe en peigne (2, 2') est monté sur ladite perche (5) par le biais dudit carter de support (3) afin de donner un angle par rapport à ladite perche (5) pour un angle établi entre 5° et 90°, en particulier entre 10° et 60°, de préférence entre 15° et 45°.

7. Dispositif portable entraîné selon la revendication 5, dans lequel ledit moteur électrique (15), ledit mécanisme de transmission entraîné (17) et ledit au moins un organe en peigne (2, 2') ont des poids respectifs et sont montés par rapport à ladite perche (5) selon des angles respectifs de telle sorte à équilibrer les forces d'inertie générées par lesdits poids pour réduire les vibrations et les déséquilibres lorsque lesdits poids sont en mouvement par rapport à l'axe (42) de ladite perche (5).

8. Dispositif portable entraîné selon la revendication 3, dans lequel ledit moteur (15) et lesdits organes en peigne (2, 2') sont montés afin de se trouver sensiblement symétriques par rapport audit axe.

9. Dispositif portable entraîné selon la revendication 1 ou 2, dans lequel lesdits doigts (4) comprennent des moyens de mise en prise relâchables (30, 37, 38) avec ledit corps (10) dudit organe en peigne (2).

10. Dispositif portable entraîné selon la revendication 9, dans lequel lesdits moyens de mise en prise relâchables comprennent une douille de montage (30), ayant un trou traversant longitudinal (31) pour loger l'un desdits doigts (4), ladite douille (30) ayant au moins une gorge longitudinale radiale (32) capable de resserrer ledit trou traversant (31) lorsque ladite douille (30) est pressée latéralement, ladite douille (30) étant adaptée pour être insérée dans un logement correspondant (36) qui peut être rétracté par des moyens de blocage (37, 38), obtenus dans ledit corps dudit organe en peigne (2), dans lequel lorsque ledit logement est rétracté, ledit logement (36) presse la douille (30) qui prend ledit doigt (30) bloqué dans ledit trou traversant (31).

11. Dispositif portable entraîné selon la revendication 1 ou 2, dans lequel ledit dispositif de récolte portable comprend des moyens de commutation situés de préférence au niveau de ladite poignée (6).

12. Dispositif portable entraîné selon la revendication 1 ou 2, dans lequel ladite perche (5) est extensible par un moyen choisi dans le groupe suivait :
- extension télescopique ;
- ajout d'éléments d'extension longitudinalement à la perche, raccordés par l'intermédiaire de moyens de fixation amovibles.

13. Dispositif portable entraîné selon la revendication 1 ou 2, dans lequel ledit dispositif de récolte portable comprend des moyens articulés (55) permettant d'orienter ledit au moins un organe en peigne (2, 2') par rapport à ladite perche (5), selon un angle établi entre -30° et +30°, de préférence entre -15° et +15°.
